# FASCICULE DE BREVET EUROPEEN

(11) **EP 2 652 494 B1**
(45) Date de publication et mention de la délivrance du brevet: **07.01.2015**
(21) Numéro de dépôt: 11817341.8
(22) Date de dépôt: 14.12.2011
(51) Int. Cl.: G01N 31/22, G01N 21/77

(54) **DÉTECTEUR MULTIFONCTIONNEL DE COMPOSÉS GAZEUX ET SES APPLICATIONS**
MULTIFUNKTIONELLER DETEKTOR FÜR GASFÖRMIGE ZUSAMMENSETZUNGEN UND DESSEN ANWENDUNGEN
MULTIFUNCTIONAL DETECTOR FOR GASEOUS COMPOSITIONS AND ITS APPLICATIONS

(30) Priorité: 16.12.2010 FR 1060643
(43) Date de publication de la demande: 23.10.2013
(73) Titulaire: Commissariat à l'Énergie Atomique et aux Énergies Alternatives, 75015 Paris (FR); Centre National de la Recherche Scientifique (CNRS), 75794 Paris Cedex 16 (FR)
(72) Inventeur: TRAN-THI, Thu-Hoa, F-77310 St Fargeau-ponthierry (FR); GARCIA, Julien, F-91191 Gif Sur Yvette Cedex (FR); NGUYEN, Thi Dinh, Edinburgh EH14 4AS (GB); NGUYEN, Trung-Hieu, F-91191 Gif Sur Yvette Cedex (FR)
(74) Mandataire: Cabinet Plasseraud
(86) Numéro de dépôt international: PCT/FR2011/052993
(87) Numéro de publication internationale: WO 2012/080665

(56) Documents cités:
- WO-A1-2010/141610
- GARCIA J ET AL: "Chemical sensors for the detection of chlorine and nitrogen trichloride at ppb level", PROCEEDINGS - 1ST INTERNATIONAL CONFERENCE ON SENSOR DEVICE TECHNOLOGIES AND APPLICATIONS, SENSORDEVICES 2010 - PROCEEDINGS - 1ST INTERNATIONAL CONFERENCE ON SENSOR DEVICE TECHNOLOGIES AND APPLICATIONS, SENSORDEVICES 2010 2010 IEEE COMPUTER SOCIETY U, juillet 2010 (2010-07), pages 1-3, XP002653116, DOI: DOI:10.1109/SENSORDEVICES.2010.8
- RICCARDI ET AL: "Immobilization of streptavidin in sol-gel films: Application on the diagnosis of hepatitis C virus", TALANTA, ELSEVIER, AMSTERDAM, NL, vol. 70, no. 3, 15 octobre 2006 (2006-10-15), pages 637-643, XP005647223, ISSN: 0039-9140, DOI: DOI:10.1016/J.TALANTA.2006.01.027

## Description

La présente invention concerne un détecteur multifonctionnel de composés gazeux et ses applications. Les composés gazeux peuvent être en solution aqueuse.

Le chlore est largement utilisé pour ses propriétés bactéricides dans les piscines et dans l'industrie alimentaire ; il est employé sous différentes formes chimiques (acide hypochloreux, hypochlorite de sodium ou de calcium, chlore gazeux, chloroisocyanurates). Il réagit avec diverses matières azotées pour produire diverses chloramines telles que la monochloramine (NH₂Cl), la dichloramine (NHCl₂) et la trichloramine (NCl₃) ainsi que des chloramines organiques. Etant donné le pH de l'eau de piscine, les composés que l'on retrouve dans l'eau sont essentiellement NH₂Cl, NHCl₂ et ClO⁻. En raison de sa faible solubilité dans l'eau, NCl₃ est l'espèce prédominante que l'on retrouve dans l'atmosphère. NCl₃ irrite les yeux et les voies respiratoires. Notamment NCl₃ est à l'origine des problèmes de bronchite chronique pour le personnel de surveillance de centres nautiques et des usines alimentaires. Il pourrait aussi être un facteur déclenchant de l'asthme, notamment chez l'enfant. D'autres produits secondaires comme les trihalométhanes sont également formés.

Il n'existe actuellement pas de valeur réglementaire relative à la qualité de l'air concernant l'exposition aux chloramines. Sur la base des premières études épidémiologiques, réalisées par l'INRS, une valeur dite de confort de 0,5 mg.m⁻³ (environ 100 ppb à 27°C) avait initialement été proposée par les chimistes et les toxicologues de l'INRS qui, plus récemment, recommandent une valeur plus faible (0,3 mg.m⁻³) dans une démarche de prévention vis-à-vis notamment des personnels de surveillance des piscines.

Les études entreprises pour quantifier la pollution des atmosphères dans les piscines et dans l'industrie alimentaire ont permis de montrer une exposition des travailleurs à des teneurs de NCl₃ parfois bien supérieure à 0,3 mg.m⁻³. Elles ont également permis de mettre en valeur la difficulté de pouvoir mesurer sur des courtes durées les teneurs des divers polluants et d'avoir un suivi de leur variation au cours du temps, notamment pour le suivi de l'exposition des travailleurs au cours d'une journée.

Il existe peu de méthodes de dosages directes des chloramines et encore moins de méthodes de dosage de la trichloramine dans l'air. Les méthodes connues sont soit peu sensibles et non sélectives, soit sensibles et sélectives mais nécessitent dans ce cas un appareillage sophistiqué et complexe d'utilisation.

Jusqu'à présent, les méthodes couramment utilisées pour la mesure des chloramines sont contraignantes car elles nécessitent une étape de prélèvement suivi d'une analyse différée en laboratoire qui n'est pas adaptée pour une prise de décision rapide en cas d'anomalie. Par ailleurs, les durées d'échantillonnage sont au minimum de 1 à 2 heures pour quantifier les chloramines avec une précision acceptable, ce qui est préjudiciable pour rendre compte de l'exposition humaine à des composés qui ont des effets à court terme sur la santé. Il est en effet recommandé d'évaluer les concentrations de pointe auxquelles sont exposés les usagers et les exploitants des établissements. De ces constats, il apparaît qu'un analyseur en continu, sensible, sélectif et d'un coût modique, serait d'une grande utilité pour le contrôle en temps réel de la qualité de l'air. Il pourrait par exemple être un outil de choix pour le travail des inspecteurs des caisses régionales d'assurance maladie. Par ailleurs, un analyseur en continu peut s'avérer utile pour piloter la gestion d'un établissement (ex : action sur la ventilation). En effet, le chlore et ses dérivés malgré leurs effets indésirables resteront largement employés dans les années à venir car ils garantissent une désinfection efficace et rémanente.

Il apparaît donc important de pouvoir disposer d'appareils de mesure en continu sensibles et sélectifs des chloramines. Il serait mieux de pouvoir également les détecter en solution, notamment dans l'eau.

Par ailleurs, le dioxyde d'azote (NO₂) se forme dans l'atmosphère à partir du monoxyde d'azote (NO) qui se dégage essentiellement lors de la combustion de combustibles fossiles, dans la circulation automobile, par exemple. Le dioxyde d'azote se transforme dans l'atmosphère en acide nitrique, qui retombe au sol et sur la végétation. Cet acide contribue, en association avec d'autres polluants, à l'acidification des milieux naturels.

D'après l'organisation mondiale de la santé (OMS), le dioxyde d'azote a des effets néfastes sur la santé : une exposition à long terme peut altérer la fonction pulmonaire et augmenter les risques de troubles respiratoires. Le dioxyde d'azote pénètre dans les voies respiratoires profondes, où il fragilise la muqueuse pulmonaire face aux agressions infectieuses, notamment chez les enfants. Aux concentrations rencontrées habituellement (inférieures à la dizaine de ppm), le dioxyde d'azote provoque une hyperactivité bronchique chez les asthmatiques.

Ainsi, NO₂ est un gaz nocif pour diverses raisons :
- Effets sur la santé : le dioxyde d'azote est irritant pour les bronches. Il entraîne la peroxydation des lipides des membranes cellulaires et induit la libération de puissants radicaux libres.
- Effets sur les végétaux : le NO₂ participe aux phénomènes de pluies acides. Les effets délétères des oxydes d'azote sur les végétaux sont la réduction de la croissance, la réduction de la production et la résistance aux pesticides.
- Effets sur les matériaux : les oxydes d'azote accroissent les phénomènes de corrosion.

Il apparait donc aussi important de pouvoir disposer d'appareils de mesure en continu sensibles, rapides et peu coûteux des oxydes d'azote ou encore de méthodes colorimétriques suffisamment sensibles pour une détection visuelle.

Par ailleurs, l'ozone est l'un des polluants de l'air dangereux pour la santé. Au-delà de certains seuils, l'ozone provoque des irritations des bronches, pouvant être très importantes chez les populations les plus sensibles.

L'ozone est très présent dans et autour des grandes agglomérations où sont produits des polluants qui sont ses précurseurs, notamment le dioxyde d'azote NO₂. Lors des canicules, on trouve l'ozone en grandes quantités dans les basses couches de l'atmosphère, surtout autour des centres urbains. Il y est principalement produit par la réaction des hydrocarbures imbrûlés et des oxydes d'azote des gaz d'échappement des véhicules avec l'oxygène de l'air sous l'influence de la lumière solaire. De même, les incendies de forêts en sont aussi une source importante, à partir des hydrocarbures et des oxydes d'azote qu'ils libèrent. Lors de fortes températures, la dispersion de l'ozone vers les couches supérieures de l'atmosphère est freinée, induisant éventuellement des problèmes de santé chez les personnes fragiles.

L'ozone est en outre produit avec les éclairs de l'orage ainsi que, plus généralement, à partir de toute étincelle ou arc électrique. Photocopieuses et imprimantes laser, lampes UV à forte puissance, ou moteurs électriques génèrent de l'ozone, pouvant conduire à des concentrations significatives dans un local mal ventilé.

En ce qui concerne les oxydes d'azote NO_{X} et l'ozone O₃, il existe dans les deux cas des méthodes de mesures sensibles nécessitant néanmoins un appareillage sophistiqué et complexe d'utilisation.

Des capteurs à détection colorimétrique ont également été développés. Ces derniers peuvent se présenter sous la forme de dosimètre. Ils permettent une quantification approximative de la concentration en polluant à laquelle les travailleurs sont exposés et ont plutôt une fonction d'alerte. Lorsqu'ils sont associés à des appareils de mesure (spectromètre d'absorption UV-Visible), la quantification est précise, sensible (quelques ppb) et rapide (quelques secondes). Néanmoins, la détection se fait dans le domaine UV et non dans le domaine du visible.

Il apparait donc également important de pouvoir disposer d'appareils de mesure en continu sensibles, rapides et peu coûteux de l'ozone ou encore de méthodes colorimétriques suffisamment sensibles pour permettre une détection visuelle.

Il serait donc particulièrement souhaitable de disposer d'un dispositif de mesure en continu sensible, rapide et peu coûteux de tout ou partie des composés précités ou encore de méthodes colorimétriques suffisamment sensibles pour leur détection visuelle.

GARCIA J ET AL décrit dans "Chemical sensors for the detection of chlorine and nitrogen trichloride at ppb level", Proceedings - 1 st International Conference On Sensor Device Technologies And Applications, Sensordevices 2010-Proceedings - IEEE COMPUTER SOCIETY U, Juillet 2010 (2010-07), un procédé de détection de gaz toxiques utilisant un film mince de silicate nanoporeux et nano structuré, dopé avec un composé tensioactif bromé, le bromure de decamethonium.

Mais le tribromure ne forme pas de complexes stables absorbant dans le visible avec les polymères (amylose, polyalcoolvinylique, etc...). En outre, les agents tensioactifs sont utilisés pour organiser une couronne d'ions Br- dans les pores comme expliqué par C.J. Brinker, Y. Lu, A. Sellinger, H. Fan, Evaporation-induced self-assembly: nanostructures made-easy, Adv. Mat., 11(7), 579-585, (1999) ou M.F. Cardinal, M. Lovino, D.L. Bernik, Comparative study of the porosity induced CTAB and tween as silica templates, Mat. Sci. Eng. C27, 75-79, (2007).

Après de longues recherches les demandeurs ont mis au point des dispositifs satisfaisants.

C'est pourquoi la présente demande a pour objet un détecteur multifonctionnel de composés gazeux ou mélanges de composés gazeux utilisant un capteur de nouveau type. Les composés gazeux ou mélanges de composés gazeux peuvent être sous forme de gaz ou en solution notamment aqueuse.

Le nouveau type de capteur comprend deux éléments essentiels:
- un iodure et
- un composé réactif choisi parmi l'amidon, l'amylose, l'amylopectine, le xyloglucane, le xylane, le chitosane, le glycogène, l'alcool polyvinylique ou un composé de l'alcool polyvinylique, la cellulose ou un composé de la cellulose, l'α-cyclodextrine, la théobromine et les polymères blocs d'oxydes de polypropylène et de polyéthylène. Dans l'invention, ces composés sont utilisés pour piéger et former des complexes colorés avec I₃- et I₂.

Le composé ci-dessus est de préférence choisi parmi l'amidon, l'amylose, l'amylopectine, le xyloglucane, le xylane, le chitosane, le glycogène, l'alcool polyvinylique ou un composé de l'alcool polyvinylique, la cellulose ou un composé de la cellulose, l'α-cyclodextrine et la théobromine.

Les composés de l'alcool polyvinylique sont des esters comme le poly(vinylacétate), ou d'autres types de dérivés comme la poly(vinylpyrrolidone). Les composés de la cellulose sont par exemple des éthers de la cellulose comme la carboxymethylcellulose et des esters de la cellulose plus solubles dans l'eau que la cellulose. Un polymère bloc d'oxydes de polyéthylène et de polypropylène est notamment le polymère triblock utilisé dans la synthèse des silices mésoporeuses SBA-15, commercialisé sous la dénomination Pluronic® P123.

Selon l'invention, le capteur est bifonctionnel. Lorsque l'échantillon à tester est gazeux, une partie d'un mélange gazeux natif à étudier peut entrer en contact direct avec un capteur comprenant un iodure et un composé réactif choisi parmi l'amidon, l'amylose, l'amylopectine, le xyloglucane, le xylane, le chitosane, le glycogène, l'alcool polyvinylique ou un composé de l'alcool polyvinylique, la cellulose ou un composé de la cellulose, l'α-cyclodextrine, la théobromine et les polymères blocs d'oxydes de polypropylène et de polyéthylène, et une autre partie du mélange gazeux à étudier peut entrer en contact avec un tel capteur, mais après traitement par un filtre comprenant une matrice de silicates neutre imprégnée d'acide sulfamique. Lorsque l'échantillon à tester est liquide, on met en contact l'échantillon liquide avec un tel capteur. Par "neutre" on signifie que la matrice ne contient pas de molécules sondes

C'est pourquoi la présente demande a pour objet un détecteur multifonctionnel de composés gazeux ou mélanges de composés gazeux choisis parmi NH₂Cl, NHCl₂, NCl₃, chlore total, NOx où x=1 ou 2, O₃ et X₂ où X=Cl, Br ou I, dans un échantillon comprenant un premier capteur comprenant un iodure et un composé réactif choisi parmi l'amidon, l'amylose, l'amylopectine, le xyloglucane, le xylane, le chitosane, le glycogène, l'alcool polyvinylique ou un composé de l'alcool polyvinylique, la cellulose ou un composé de la cellulose, l'α-cyclodextrine, la théobromine et les polymères blocs d'oxydes de polypropylène et de polyéthylène, incorporés dans un bloc de matériau sol-gel absorbant dans l'UV mais pas dans le visible.

Les polymères ci-dessus forment des complexes stables absorbant dans le visible avec le triiodure. Il est à noter que les polymères nommés ne sont pas des agents tensio-actifs, ni utilisés comme tels. Leur fonction est de former des complexes de triiodure.

Le chlore total correspond à la somme du chlore combiné (NH₂Cl + NHCl₂ + NCl₃) et du chlore libre (Cl₂ ou CIOH ou ClO⁻). Dans ce qui suit, l'expression "composé gazeux" visera aussi bien un mélange de composés gazeux sauf lorsque le contexte indique le contraire.

Dans des conditions préférentielles de mise en oeuvre de l'invention, le détecteur multifonctionnel ci-dessus est adapté à des composés gazeux ou mélanges de composés gazeux choisis parmi NH₂Cl, NHCl₂, NCl₃, chlore total, NOx où x=1 ou 2, O₃ et X₂ où X=Cl, Br ou I, dans un échantillon sous forme de gaz et renferme en outre
- un filtre comprenant une matrice de silicates neutre imprégnée d'acide sulfamique,
- des moyens pour mettre en contact une première partie du mélange de gaz directement avec le premier capteur,
- des moyens pour mettre en contact une deuxième partie du mélange de gaz avec le premier capteur, après traversée du filtre.

Dans d'autres conditions préférentielles de mise en oeuvre de l'invention, le détecteur multifonctionnel ci-dessus est adapté à des composés gazeux ou mélanges de composés gazeux choisis parmi NH₂Cl, NHCl₂, NCl₃, chlore total, NO_{X} où x= 1 ou 2, O₃ et X₂ où X=Cl, Br ou I, dans un échantillon sous forme de gaz et renferme en outre un deuxième type de capteurs comprenant du phénol incorporé dans une matrice sol-gel absorbant dans l'UV mais pas dans le visible. Ce deuxième capteur sert à détecter uniquement NH₂Cl.

C'est pourquoi la présente demande a aussi pour objet un détecteur multifonctionnel de composés gazeux ou mélanges de composés gazeux choisis parmi NH₂Cl, NHCl₂, NCl₃, chlore total, NOx où x= 1 ou 2, O₃ et X₂ où X=Cl, Br ou I, dans un échantillon sous forme de gaz comprenant
- un premier capteur comprenant un iodure et un composé réactif choisi parmi l'amidon, l'amylose, l'amylopectine, le xyloglucane, le xylane, le chitosane, le glycogène, l'alcool polyvinylique ou un composé de l'alcool polyvinylique, la cellulose ou un composé de la cellulose, l'α-cyclodextrine, la théobromine et les polymères blocs d'oxydes de polypropylène et de polyéthylène, incorporés dans un bloc de matériau sol-gel absorbant dans l'UV mais pas dans le visible, et
- un deuxième capteur comprenant du phénol et du nitroprussiate de sodium incorporés dans un bloc de matériau sol-gel absorbant dans l'UV mais pas dans le visible,
- un filtre comprenant une matrice de silicates neutre imprégnée d'acide sulfamique,
- des moyens pour mettre en contact une première partie du mélange de gaz directement avec le premier capteur,
- des moyens pour mettre en contact une deuxième partie du mélange de gaz avec le premier capteur, après traversée du filtre,
- des moyens pour mettre en contact une troisième partie du mélange de gaz directement avec le deuxième capteur.

Dans la présente demande et dans ce qui suit, le terme "matrice" désigne le matériau sol-gel dopé de réactif(s) et notamment de molécules-sondes. Le terme "composé gazeux recherché " désigne le ou les composés gazeux recherchés dans l'échantillon, par exemple le mélange de gaz, testé. Les composés du premier ou du deuxième capteur incorporés dans un bloc de matériau sol-gel seront appelés génériquement les " molécules-sondes".

Pour rappel, un matériau sol-gel est un matériau obtenu par un procédé sol-gel consistant à utiliser comme précurseurs des alcoxydes de formule M(OR)ₙ où M est un métal, notamment le silicium, et R un groupement alkyle, et à les hydrolyser. En présence d'eau, l'hydrolyse des groupements alkoxy (OR) intervient, formant des petites particules de taille généralement inférieure à 1 nanomètre. Ces particules s'agrègent et forment des amas qui restent en suspension sans précipiter, et forment un sol. L'augmentation des amas augmente la viscosité du milieu qui gélifie. Un matériau sol-gel est obtenu par séchage du gel, en évacuant le solvant en dehors du réseau polymérique formé.

Les molécules sondes sont incorporées dans un bloc de matériau sol-gel absorbant dans l'UV mais pas dans le visible. L'une des molécules sondes est un iodure, pouvant être de l'iodure de sodium, de l'iodure de potassium ou encore de l'iodure d'ammonium. La seconde molécule sonde est de préférence l'amylose, comportant de préférence de 40 à 3000 unités glucose et, notamment de 250 à 350 unités glucose, particulièrement 300 unités glucose.

Les polymères blocs d'oxydes de polypropylène et de polyéthylène sont par exemple le Pluronic® P123 de masse moléculaire moyenne en nombre de préférence de 1500 à 4000, notamment 2800.

Les composés de l'alcool polyvinylique sont par exemple des acétates polyvinyliques de poids moléculaire de préférence de 60000 à 200000, notamment 80000, ou les polyvinylpyrrolidones de poids moléculaire de préférence de 8000 à 40000, notamment 15000. L'alcool polyvinylique est de poids moléculaire de préférence supérieur à 60000 et notamment 125000.

Les composés réactifs préférés sont avantageusement choisis comme ci-dessus.

Un ou plusieurs des composés gazeux ou mélanges de composés gazeux NH₂Cl, NHCl₂, NCl₃, Chlore total, NO_{X} où x= 1 ou 2, O₃ et X₂ où X=Cl, Br ou I peuvent être présents dans un mélange de gaz. Ils peuvent être notamment présents dans un gaz comme ceux que l'on rencontre notamment dans les ateliers de production ou de recherche de diverses industries ou activités comme celles précédemment citées, et particulièrement dans l'industrie des semi-conducteurs.

Dans l'atmosphère, on va ainsi retrouver NCl₃, NHCl₂, NH₂Cl et parfois Cl₂ en faible quantité. Dans l'eau de piscine, qui a un pH de 6,5 à 7,5, on retrouve ClO⁻, NCl₃, NHCl₂, NH₂Cl et ClOH.

Dans un bloc de matériau sol-gel du premier capteur, l'iodure représente avantageusement de 0,0054 à 0,55, de préférence de 0,01 à 0,11, notamment environ 0,055 % en poids du bloc. L'autre molécule sonde représente avantageusement de 0,05 à 0,25, de préférence de 0,1 à 0,2, notamment environ 0,17 % en poids du bloc. Le reste du bloc est essentiellement (plus de 90%, notamment plus de 95%, particulièrement plus de 99%) ou totalement constitué du matériau sol-gel.

Dans un bloc de matériau sol-gel du deuxième capteur, le phénol représente avantageusement de 10 à 25, de préférence de 11 à 18, notamment environ 14 % en poids du bloc. Le nitroprussiate de sodium représente avantageusement de 0,01 à 0,25, de préférence de 0,03 à 0,11, notamment environ 0,06 % en poids du bloc. Enfin, la soude représente avantageusement de 1 à 17, de préférence de 3 à 12 et notamment environ 6 % en poids du bloc. Le reste du bloc est essentiellement (plus de 90%, notamment plus de 95%, particulièrement plus de 99%) ou totalement constitué du matériau sol-gel.

Dans un filtre comprenant une matrice de silicates neutre, l'acide sulfamique représente avantageusement de 5 à 15, de préférence de 8 à 12, notamment environ 10 % en poids du bloc matriciel c'est-à-dire du poids du total des constituants silicates et acide sulfamique de la matrice de silicates neutre.

Dans des conditions préférentielles de mise en oeuvre de l'invention, les capteurs sont initialement transparents.

Un premier capteur peut être préparé comme suit:
- on solubilise un composé réactif choisi parmi l'amidon, l'amylose, l'amylopectine, le xyloglucane, le xylane, le chitosane, le glycogène, l'alcool polyvinylique ou un composé de l'alcool polyvinylique, la cellulose ou un composé de la cellulose, l'α-cyclodextrine, la théobromine et les polymères blocs d'oxydes de polypropylène et de polyéthylène dans une solution aqueuse.
- on homogénéise par exemple dans un bac à ultra sons puis porte à ébullition et ensuite refroidit à température ambiante,
- on ajoute un alcoxyde de formule M(OR)n où M est un métal, notamment le silicium, et R un groupement alkyle, par exemple du tétraméthoxysilane, puis l'iodure de sodium sous forme solide,
- on met le sol sous agitation à l'abri de la lumière et à température ambiante pendant 10 à 20 minutes et notamment environ 12 minutes,
- on prélève le sol pour le couler dans des moules qui sont bouchés hermétiquement pendant 24 heures puis les bouchons sont remplacés par un film poreux,
- on conserve alors à l'abri de la lumière pour obtenir un bloc de matériau sol-gel contenant les molécules-sondes désirées.

Un deuxième capteur peut être préparé par exemple comme suit:
- on solubilise du phénol, du nitroprussiate de sodium et de la soude dans un mélange d'eau millipore et de méthanol,
- La solution est agitée puis plongée dans un bain d'éthanol refroidi à moins (-) 18°C,
- on ajoute un alcoxyde de formule M(OR)n où M est un métal, notamment le silicium, et R un groupement alkyle, par exemple du tétraméthoxysilane,
- la solution est maintenue à -18°C sous agitation pendant 1 minute. Le rapport molaire du mélange final des précurseurs est tétraméthoxysilane/méthanol/eau 1/2/6,
- on prélève le sol pour le couler dans des moules qui sont bouchés hermétiquement.
- on conserve alors 20 jours à l'abri de la lumière pour obtenir un bloc de matériau sol-gel contenant les molécules-sondes désirées.

Un détecteur multifonctionnel de l'invention peut prendre plusieurs formes selon qu'il est destiné à un échantillon gazeux ou liquide.

Destiné à un échantillon gazeux, il peut prendre la forme d'un support compartimenté, un premier compartiment contenant un premier capteur et un autre compartiment contenant un deuxième capteur. En particulier, il peut prendre la forme d'un support compartimenté, un premier compartiment contenant un premier capteur et un autre compartiment contenant un deuxième capteur, le premier compartiment étant de préférence lui-même compartimenté pour diviser le flux en deux, une partie du flux traversant un filtre ci-dessus avant d'accéder au premier capteur.

Destiné à un échantillon liquide, il peut prendre la forme d'un disque d'une épaisseur fixée, disposé dans une plaque multipuits ; il peut notamment prendre la forme d'une couche mince, par exemple fixée sur une bandelette de matière plastique à tremper dans l'échantillon liquide. La couche mince peut comprendre un support de cellulose, par exemple de papier filtre, imprégné de molécules-sondes.

Les détecteurs multifonctionnels objet de la présente invention possèdent de très intéressantes propriétés et qualités. Notamment un changement de coloration d'un premier capteur, du deuxième capteur ou des différents capteurs se produit au contact des composés gazeux recherchés contenus dans un mélange de gaz étudié, ou un changement de coloration d'un premier capteur ou d'un deuxième capteur ou des deux se produit au contact de composés gazeux recherchés contenus dans un échantillon liquide étudié.

Les réactions intervenant au niveau d'un premier capteur entre les composés réactifs et un composé gazeux recherché (NCl₃, chlore total, NO_{X} où x= 1 ou 2 ou encore O₃, X₂ où X=Cl, Br ou I) donnent lieu à la formation d'un produit dont les propriétés absorbantes sont différentes de celles des composés réactifs initiaux. Les réactifs sont insérés dans une matrice de polymère (sol-gel) pour donner un composé hybride organique-inorganique et absorbent dans l'UV mais pas dans le visible. Les produits de la réaction entre les divers composés réactifs et les composés gazeux recherchés absorbent dans le visible. La détection optique est rapide et est réalisable in situ en une seule étape. Pour détecter une coloration, les sources de lumière utilisables dans le visible telles que les diodes électroluminescentes permettent de réduire le coût de l'appareillage optique.

La formation d'un complexe entre le composé réactif du premier capteur et des ions I₃⁻, produit une coloration dans le visible. Par exemple la formation d'un complexe Amylose/I₃⁻, absorbe à 580 nm. Selon la nature du composé réactif, le complexe formé absorbe dans le visible avec une position du maximum d'absorption située de 460 à 680 nm.

La formation d'un complexe entre le composé réactif d'un premier capteur et la trichloramine produit aussi une coloration dans le visible.

Dans ce cas, le mélange de gaz testé est préalablement traité afin d'éliminer toutes les espèces chlorées à l'exception de la trichloramine NCl₃. A cet effet, le mélange de gaz passe au travers d'un filtre constitué d'une matrice de silicates neutre imprégnée d'acide sulfamique, milieu dans lequel seule la trichloramine est insoluble et stable. Si un mélange de gaz ne contenant plus que de la trichloramine est mis au contact du premier capteur, la formation d'un complexe entre le réactif du premier capteur et des ions I₃⁻formés, produit une coloration dans le visible, par exemple encore la formation d'un complexe Amylose/I₃⁻, absorbant à 580 nm.

Ainsi, le premier capteur est par lui-même bifonctionnel, car agissant pour partie avec un flux de mélange de gaz natif et pour partie avec un flux de gaz préalablement traité.

La réaction intervenant au niveau du deuxième capteur entre le phénol et la monochloramine NH₂Cl donne lieu à la formation d'un produit dont les propriétés absorbantes sont différentes de celles des composés réactifs initiaux. Le phénol est inséré avec du nitroprussiate de sodium, catalyseur de la réaction, dans une matrice de polymère pour donner un composé hybride organique-inorganique et absorbe dans l'UV mais pas dans le visible. Le produit de la réaction entre le phénol et la monochloramine, un dérivé indophénol absorbe dans le visible à 635 nm.

C'est pourquoi la présente demande a aussi pour objet un procédé de détection de composés gazeux ou mélanges de composés gazeux choisis parmi NH₂Cl, NHCl₂, NCl₃, chlore total, NOx où x=1 ou 2, O₃ et X₂ où X=Cl, Br ou I, contenus dans un échantillon liquide ou gazeux, caractérisé en ce que l'on met en contact un détecteur multifonctionnel ci-dessus comprenant un premier capteur avec l'échantillon et en ce que l'on observe l'éventuel changement de couleur des blocs de matériau sol-gel constituant le premier capteur.

La présente demande a également pour objet un procédé de détection de composés gazeux choisis parmi NH₂Cl, NHCl₂, NCl₃, chlore total, NO_{X} où x= 1 ou 2, O₃ et X₂ où X=Cl, Br ou I, contenus dans un mélange de gaz caractérisé en ce que l'on expose un détecteur multifonctionnel ci-dessus comprenant un premier capteur et un deuxième capteur à un flux d'un mélange de gaz et en ce que l'on observe l'éventuel changement de couleur des blocs de matériau sol-gel constituant le premier capteur ou le deuxième capteur.

Le flux gazeux susceptible de contenir des composés gazeux à détecter ou étudier peut provenir d'une atmosphère polluée. Il peut notamment circuler à un débit de 10 mL.min⁻¹ à 1,1 L.min⁻¹.

Dans d'autres conditions préférentielles de mise en oeuvre de l'invention, une première partie du mélange de gaz est mise en contact directement avec un premier bloc d'un premier capteur, et une deuxième partie du mélange de gaz est mise en contact après traversée du filtre avec un deuxième bloc d'un premier capteur. En d'autres termes, on utilise deux blocs distincts de premier capteur selon que le mélange de gaz arrive directement ou après traversée du filtre ci-dessus.

Dans le cas d'un échantillon liquide, on pose une quantité de liquide (par exemple une goutte ou une microgoutte sur un bloc de matériau sol-gel constituant le premier capteur ou le deuxième capteur, ou sur un bloc de matériau sol-gel constituant le premier capteur et un bloc de matériau sol-gel constituant le deuxième capteur.

Suivant la quantité de composés réactifs, en plus de la détection de composés gazeux, on peut procéder à leur piégeage.

C'est pourquoi la présente demande a aussi pour objet un procédé de piégeage de composés gazeux choisis parmi NH₂Cl, NHCl₂, NCl₃, chlore total, NO_{X} où x= 1 ou 2, O₃ et X₂ où X=Cl, Br ou I contenus dans un mélange de gaz, caractérisé en ce que l'on expose un détecteur multifonctionnel ci-dessus comprenant un premier capteur et un deuxième capteur, à un flux d'un mélange de gaz pour obtenir un mélange de gaz sans composé gazeux choisi parmi NH₂Cl, NHCl₂, NCl₃, chlore total, NO_{X} où x= 1 ou 2, O₃ et X₂ où X=Cl, Br ou I, ou un mélange de gaz avec un contenu plus faible de tels composés gazeux.

Le suivi de la coloration en fonction du temps permet de déterminer la vitesse de la réaction, qui est proportionnelle à la concentration en composé gazeux recherché.

C'est pourquoi la présente demande a aussi pour objet un procédé d'évaluation de la quantité ou de la concentration de composés gazeux ci-dessus contenus dans un mélange de gaz caractérisé en ce que l'on procède au suivi de la coloration en fonction du temps. De ce suivi on peut déduire l'évaluation précitée.

Le suivi de la coloration en fonction du temps peut être réalisé par exemple par spectroscopie d'absorption. Un dispositif approprié comprend au moins une source d'excitation lumineuse et un collecteur.

La variation de couleur peut notamment être évaluée visuellement ou mesurée de manière précise à l'aide d'un appareil fondé sur l'absorbance ou la réflectance.

La présente demande a encore pour objet un système de piégeage ou de détection de composés gazeux utilisant comme capteur un détecteur multifonctionnel ci-dessus comprenant un premier capteur ou un premier capteur et un deuxième capteur.

Un tel système peut notamment comprendre un dispositif d'aspiration pour provoquer un flux d'un mélange de gaz, particulièrement à débit constant ou pulsé (succession de phases de marche et d'arrêt du débit), sur des périodes continues ou séquentielles. Il comprend aussi notamment un ou plusieurs points de captage du mélange de gaz, par exemple éloignés du système.

A noter que dans la présente demande, classiquement l'article indéfini "un" doit être considéré comme un pluriel générique (signification de "au moins un" ou encore "un ou plusieurs"), sauf lorsque le contexte montre le contraire (1 ou "un seul"). Ainsi, par exemple, lorsque l'on dit ci-dessus que le premier capteur comprend un sel d'iodure et un composé réactif, il s'agit de un ou plusieurs sels d'iodure et ou plusieurs composés réactifs.

Les conditions préférentielles de mise en oeuvre des détecteurs multifonctionnels ci-dessus décrites s'appliquent également aux autres objets de l'invention visés ci-dessus, notamment aux procédés les mettant en oeuvre.

Les exemples qui suivent illustrent la présente demande.

L'invention sera mieux comprise si l'on se réfère aux dessins annexés sur lesquels
- la figure 1 représente la variation de l'absorbance à 580 nm en fonction du temps d'exposition évaluée par spectroscopie d'absorption UV-Visible d'une matrice de matériau sol-gel de l'exemple 1 exposés à 10 ppm de NO₂.
- la figure 2 représente la vitesse de formation du complexe coloré à 580 nm en fonction de la concentration en NO₂ contenu dans le gaz étudié évaluée par spectroscopie d'absorption UV-Visible de blocs de matériau sol-gel de l'exemple 1 exposés à NO₂. C'est la courbe de calibration pour la détection de NO₂.
- la figure 3 représente le suivi par spectroscopie d'absorption UV-Visible de la formation du complexe Amylose / I₃⁻ au cours du temps, lors de l'exposition de blocs de matériau sol-gel de l'exemple 1 à un mélange gazeux contenant 32 ppb de NCl₃.
- la figure 4 représente la cinétique de formation du complexe à 580 nm pour une concentration en NCl₃ fixe et égale à 32 ppb en fonction du temps pour des blocs de matériau sol-gel de l'exemple 1 exposés à un mélange gazeux contenant du NCl₃.
- la figure 5 représente le suivi par spectroscopie d'absorption UV-Visible de la formation du complexe Amylose / I₃⁻ pour une exposition de bloc de matériau sol-gel de l'exemple 1 pendant 30 min. à des gouttelettes d'eau contenant différentes concentrations de HClO.

### Exemple 1 : préparation d'un premier capteur

On a réalisé un premier capteur comme suit :
30 mg d'amylose sont solubilisés dans 50 ml de solution tampon à pH = 4,65. La solution est introduite dans un bac à ultra son pendant 60 minutes, puis portée à ébullition pendant 60 minutes, et enfin refroidie à température ambiante.
12 ml de cette solution d'amylose sont alors ajoutés à 6 ml de tétraméthoxysilane. Enfin, 2,7 mg d'iodure de sodium sont ajoutés sous forme solide de manière à obtenir une concentration de 10⁻³ M dans la solution finale.

Le sol est alors mis sous agitation à l'abri de la lumière et à température ambiante pendant 12 minutes. Ce dernier est alors prélevé millilitre par millilitre et est reversé dans des cuves en polystyrène. Ces dernières sont alors bouchées hermétiquement à l'aide d'un bouchon pendant 24 heures.

Le lendemain, les bouchons sont remplacés par un film poreux. Le sol est alors conservé à l'abri de la lumière pour obtenir des blocs de matériau sol-gel contenant le réactif. Ces blocs sont des xérogels constituant un premier capteur.

### Exemple 2 : préparation d'un premier capteur

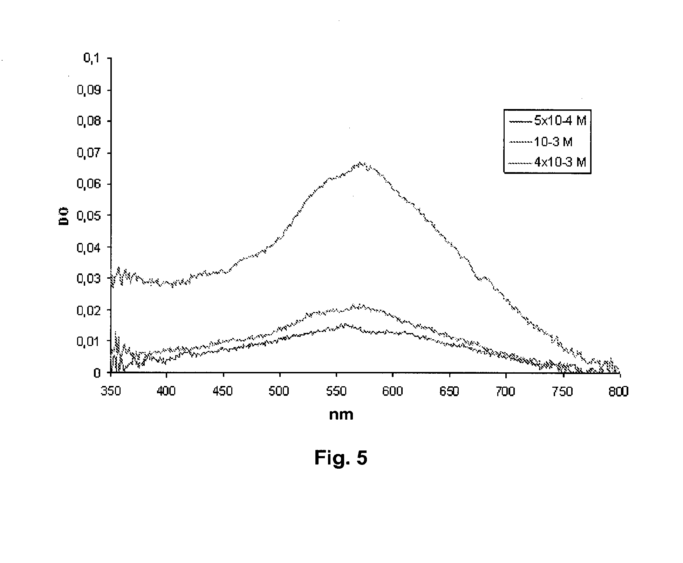

Avec les composés réactifs hydrosolubles, les matrices obtenues par synthèse par le procédé sol-gel sont transparentes. Lorsque le composé réactif est insoluble dans l'eau comme la cellulose, des blocs contenant Nal ou Kl ou NH₄I peuvent être produits à partir de poudre solide. On obtient alors des blocs translucides qui, exposés aux chloramines, ou à NO₂, O₃, I₂ etc... se colorent en bleu-violet. La couleur est visible à l'oeil nu (voir figure 5). La variation de couleur peut si désiré être mesurée de manière précise par réflectance.

### Exemple 3 : préparation d'un deuxième capteur

47,7 mg de phénol, 20,3 mg de soude ainsi que 0,2 mg de nitroprussiate de sodium sont repris dans 1621 µl d'eau et 1217 µl de méthanol. La solution est alors agitée et plongée dans un bain d'éthanol à -18°C. 2232 µl de tétraméthoxysilane sont alors additionnés. La solution est maintenue à -18°C sous agitation pendant une minute. Le sol est alors prélevé millilitre par millilitre et est reversé dans des cuves en polystyrène. Ces dernières sont alors bouchées hermétiquement à l'aide d'un bouchon pendant 20 jours. Le rapport molaire du mélange des précurseurs et des solvants TMOS/ /Méthanol/H₂O est 1/2/6.

### Exemple 4 : Préparation de filtre pour le premier capteur

Dans un premier temps, on prépare des matrices neutres selon les proportions suivantes: Tétraméthoxysilane / Méthyltriméthoxysilane / Eau / Méthanol 0,9/0,1/4/4. Dans un pilulier, on introduit 3,5 ml tétraméthoxysilane, 1,88 ml d'eau millipore, 4,24 ml de méthanol et enfin 373 µl de méthyltriméthoxysilane. La solution est agitée pendant 30 min à température ambiante. Le sol est alors prélevé millilitre par millilitre et est reversé dans des cuves en plastique. Ces dernières sont alors bouchées hermétiquement à l'aide d'un bouchon pendant 24 heures. Le lendemain, les bouchons sont remplacés par un film poreux. Le sol est alors conservé à l'abri de la lumière pour obtenir des blocs de matériau sol-gel.
On concasse alors grossièrement à l'aide d'un mortier 7g de blocs ainsi obtenus (0,2 g/bloc) et on les imprègne avec 2 ml d'une solution aqueuse d'acide sulfamique saturée.

### Expérimentation 1 : Relation entre l'intensité du pic coloré et la quantité de produit testé

Un bloc de matériau sol-gel de l'exemple 1 est exposé à un flux gazeux continu de 200 ml/min contenant une concentration fixe de NCl₃ de 32 ppb. Le suivi par spectroscopie d'absorption UV-Visible au cours du temps d'exposition permet d'observer l'apparition d'un pic à 580 nm caractéristique du complexe Amylose / I₃⁻. L'intensité de ce pic augmente au cours de l'exposition, ce qui signifie que plus la quantité de NCl₃ est importante, plus la quantité de produit formé est importante.

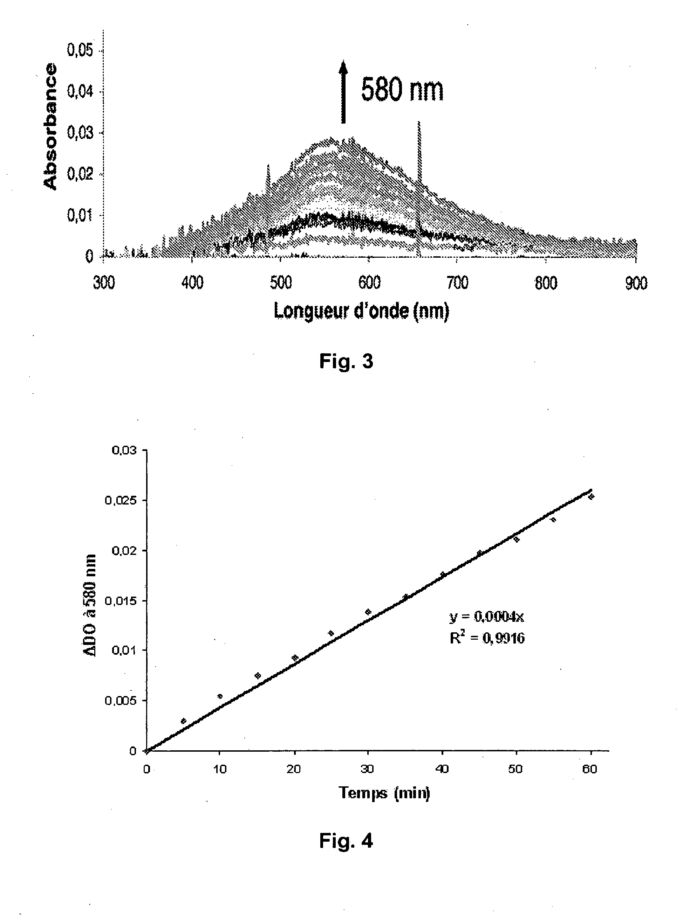

Les résultats sont reportés sur la figure 3.

### Expérimentation 2 : Application à la détection de NO₂

Des blocs de matériau sol-gel de l'exemple 1 sont exposés à des flux continus de 200 ml/min d'azote contenant 10 ppm de NO₂. Le suivi par spectroscopie d'absorption UV-Visible met en évidence la formation du complexe Amylose / I₃⁻ absorbant à 580 nm.

La variation de l'absorbance à 580 nm est alors reportée en fonction du temps d'exposition.

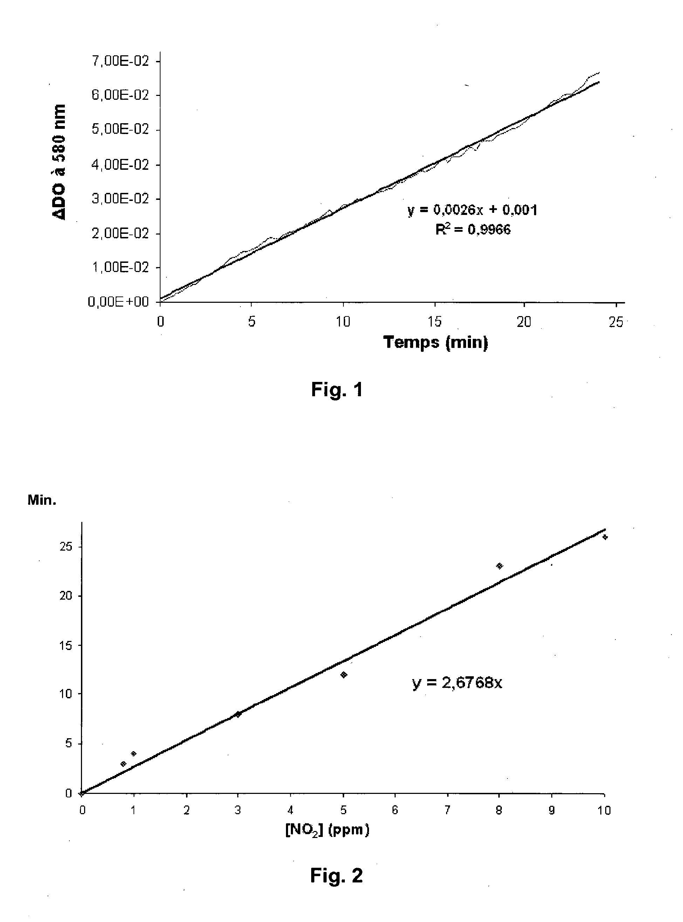

Les résultats sont reportés sur la figure 1.

### Expérimentation 3 : Application à la détection de NO₂

Le même procédé qu'à l'expérimentation 2 est répété pour différentes concentrations de NO₂ à un débit de 200 ml/min. Comme vu précédemment, la pente de la variation de l'absorbance, qui correspond à la vitesse de formation du complexe Amylose / I₃⁻, est dépendante de la concentration de NO₂ contenu dans le flux gazeux. Ainsi, le tracé de la valeur des pentes en fonction de la concentration en NO₂ donne la courbe de calibration pour la détection de NO₂.

Les résultats sont reportés sur la figure 2.

### Expérimentation 4 : Application à la détection de NCl₃

On opère comme à l'expérimentation 2. Cependant, dans ce cas, le flux gazeux étudié est préalablement traité afin d'éliminer toutes les espèces chlorées à l'exception de la trichloramine NCl₃. A cet effet, le flux gazeux passe au travers d'un filtre constitué de matrices de silicates neutre imprégnées d'acide sulfamique, milieu dans lequel seule NCl₃ est insoluble et stable. Le gaz ne contenant plus que NCl₃ est mis au contact du matériau sol-gel de l'exemple 1.

Un bloc de matériau sol-gel de l'exemple 1 est alors exposé à un flux gazeux continu de 200 ml/min contenant une concentration fixe de NCl₃ de 32 ppb. Le suivi par spectroscopie d'absorption UV-Visible au cours du temps d'exposition permet d'observer l'apparition d'un pic à 580 nm caractéristique du complexe Amylose / I₃⁻. L'intensité de ce pic augmente au cours de l'exposition, ce qui signifie que plus la quantité de NCl₃ est importante, plus la quantité de produit coloré formé est importante.

Les résultats sont reportés sur la figure 3.

Pour un flux gazeux de débit et de concentration en polluant fixes, la pente de la variation de l'absorbance à 580 nm, qui correspond à la vitesse de formation du complexe Amylose / I₃⁻, est dépendante de la concentration de NCl₃ contenu dans le flux gazeux.

Les résultats sont reportés sur la figure 4.

### Expérimentation 5 : Application à la détection de NCl₃ en mode pulsé

On opère comme à l'exemple 4, mais un même bloc est exposé durant 2 minutes à un flux gazeux contenant une concentration fixe de NCl₃ suivi d'une période de 5 min sans flux gazeux. La réaction est suivie par spectroscopie d'absorption UV-Visible à 580 nm. Cette étape est répétée plusieurs fois. Pour chaque exposition, la variation de l'absorbance à 580 nm est collectée en fonction du temps, et les pentes correspondantes sont déterminées.

On fait la moyenne des valeurs des différentes pentes (ou taux de formation du complexe en min⁻¹, s). Pour une concentration de NCl₃ = 45 ppb, la pente moyenne est de 0,0017 min⁻¹.

Le même procédé est répété pour différentes concentrations de NCl₃ à un débit de 200 ml/min. La pente de la variation de l'absorbance, qui correspond à la vitesse de formation du complexe Amylose / I₃⁻, est dépendante de la concentration de NCl₃ contenu dans le flux gazeux. Ainsi, le tracé de la valeur moyenne des pentes en fonction de la concentration en NCl₃ donne la courbe de calibration pour la détection de NCl₃.

Ainsi, un même capteur peut servir plusieurs fois, et on peut calculer la moyenne des valeurs des différentes pentes obtenues pour affiner un résultat.

### Expérimentation 6 : Application à la détection de HClO / ClO⁻ en solution aqueuse

On prépare différentes solutions contenant différentes concentrations d'acide hypochloreux HClO entre 10⁻⁴ et 5x10⁻³ mol/l, qui présentent un pH = 7,5.

On dépose une goutte d'un volume d'environ 10 µl de chacune des solutions ci-dessus sur des blocs de matériau sol-gel de l'exemple 1. On laisse les gouttelettes diffuser dans le matériau poreux durant 30 minutes. La diffusion de la goutte entraîne un changement de coloration du capteur initialement transparent, à cause de la réaction entre la molécule sonde et l'espèce chlorée en solution. Cette réaction, qui conduit à la formation d'un complexe absorbant à 580 nm, est suivie par spectroscopie d'absorption UV-Visible.

Le résultat obtenu est montré à la figure 5.

L'intensité du pic à 580 nm est directement reliée à la concentration en espèces chlorées présentes dans la solution à analyser.

## Revendications

1. Un détecteur multifonctionnel de composés gazeux ou mélanges de composés gazeux choisis parmi NH₂Cl, NHCl₂, NCl₃, chlore total, NOx où x=1 ou 2, O₃ et X₂ où X=Cl, Br ou I dans un échantillon, ledit détecteur comprenant un premier capteur comprenant un iodure et un composé réactif choisi parmi l'amidon, l'amylose, l'amylopectine, le xyloglucane, le xylane, le chitosane, le glycogène, l'alcool polyvinylique ou un composé de l'alcool polyvinylique, la cellulose ou un composé de la cellulose, l'α-cyclodextrine, la théobromine et les polymères blocs d'oxydes de polypropylène et de polyéthylène, incorporés dans un bloc de matériau sol-gel absorbant dans l'UV mais pas dans le visible.

2. Un détecteur multifonctionnel selon la revendication 1, **caractérisé en ce que** dans un bloc de matériau sol-gel du premier capteur, l'iodure représente de 0,0054 à 0,55% en poids du bloc.

3. Un détecteur multifonctionnel selon la revendication 1 ou 2, **caractérisé en ce que** dans un bloc de matériau sol-gel du premier capteur, le composé réactif représente de 0,05 à 0,25 % en poids du bloc.

4. Un détecteur multifonctionnel selon l'une des revendications 1 à 3, adapté à des composés gazeux ou mélanges de composés gazeux choisis parmi NH₂Cl, NHCl₂, NCl₃, chlore total, NOx où x=1 ou 2, O₃ et X₂ où X=Cl, Br ou I, contenus dans un échantillon liquide ou gazeux, **caractérisé en ce qu'**il comprend en outre
- un filtre comprenant une matrice de silicates neutre imprégnée d'acide sulfamique,
- des moyens pour mettre en contact une première partie du mélange de gaz directement avec le premier capteur,
- des moyens pour mettre en contact une deuxième partie du mélange de gaz avec le premier capteur, après traversée du filtre.

5. Un détecteur multifonctionnel selon l'une des revendications 1 à 4, adapté à des composés gazeux ou mélanges de composés gazeux choisis parmi NH₂Cl, NHCl₂, NCl₃, chlore total, NO_{X} où x= 1 ou 2, O₃ et X₂ où X=Cl, Br ou I, contenus dans un échantillon liquide ou gazeux, **caractérisé en ce qu'**il comprend en outre un deuxième type de capteurs comprenant du phénol incorporé dans une matrice sol-gel absorbant dans l'UV mais pas dans le visible.

6. Un détecteur multifonctionnel selon la revendication 5, **caractérisé en ce que** dans un bloc de matériau sol-gel du deuxième capteur, le phénol représente de 10 à 25 % en poids du bloc.

7. Un détecteur multifonctionnel selon l'une des revendications 5 et 6, **caractérisé en ce que** dans un bloc de matériau sol-gel du deuxième capteur, le nitroprussiate de sodium représente de 0,01 à 0,25 % en poids du bloc.

8. Un détecteur multifonctionnel selon l'une des revendications 5 à 7, **caractérisé en ce qu'**un bloc de matériau sol-gel du deuxième capteur comprend de la soude qui représente de 1 à 17 % en poids du bloc.

9. Un détecteur multifonctionnel selon l'une des revendications 4 à 8, **caractérisé en ce que** dans le filtre comprenant une matrice de silicates neutre, l'acide sulfamique représente de 5 à 15 % en poids du total des constituants silicates et acide sulfamique de la matrice de silicates neutre.

10. Un procédé de détection de composés gazeux ou mélange de composés gazeux contenus dans un échantillon liquide ou gazeux tels que définis à la revendication 1 **caractérisé en ce que** l'on expose un détecteur multifonctionnel tel que défini à l'une des revendications 1 à 4 à un échantillon et **en ce que** l'on observe l'éventuel changement de couleur d'un bloc de matériau sol-gel constituant le premier capteur.

11. Un procédé de détection de composés gazeux ou mélange de composés gazeux tels que définis à la revendication 5 contenus dans un échantillon liquide ou gazeux, **caractérisé en ce que** l'on expose un détecteur multifonctionnel tel que défini à la revendication 5 à un flux d'un mélange de gaz ou à un liquide et **en ce que** l'on observe l'éventuel changement de couleur des blocs de matériau sol-gel constituant le premier capteur ou le deuxième capteur, et optionnellement on procède à la détection des composés gazeux.

12. Utilisation d'un détecteur multifonctionnel tel que défini à l'une des revendications 1 à 9 dans le piégeage de composés gazeux tels que définis à la revendication 1 contenus dans un mélange de gaz ou dans un échantillon liquide, ou dans leur détection.

13. Utilisation d'un détecteur multifonctionnel tel que défini à l'une des revendications 5 à 9 dans le piégeage de composés gazeux tels que définis à la revendication 5 contenus dans un mélange de gaz ou dans un échantillon liquide, ou dans leur détection.

14. Un procédé de piégeage de composés gazeux tels que définis à la revendication 1 contenus dans un mélange de gaz ou dans un échantillon liquide, utilisant comme capteur un détecteur multifonctionnel tel que défini à l'une des revendications 1 à 9, ou de composés gazeux tels que définis à la revendication 5 contenus dans un mélange de gaz ou dans un échantillon liquide, utilisant comme capteur un détecteur multifonctionnel tel que défini à l'une des revendications 5 à 9, dans lequel on met en contact un mélange de gaz ou un échantillon liquide avec le détecteur multifonctionnel, ou fait circuler un tel flux sur celui-ci.

15. Un système de piégeage ou de détection de composés gazeux contenus dans un mélange de gaz ou dans un échantillon liquide, utilisant comme capteur un détecteur multifonctionnel tel que défini à l'une des revendications 1 à 9.

## Patentansprüche

1. Ein multifunktioneller Detektor für gasförmige Verbindungen oder Gemische gasförmiger Verbindungen, ausgewählt aus NH₂Cl, NHCl₂, NCl₃, Gesamtchlor, NOx, wobei x = 1 oder 2, O₃ und X₂, wobei X = Cl, Br oder I, in einer Probe, wobei der Detektor einen ersten Sensor umfasst, der ein Iodid und eine reaktive Verbindung, ausgewählt aus Stärke, Amylose, Amylopektin, Xyloglucan, Xylan, Chitosan, Glykogen, Polyvinylalkohol oder einer Polyvinylalkoholverbindung, Cellulose oder einer Celluloseverbindung, α-Cyclodextrin, Theobromin und Blockpolymeren von Polypropylen- und Polyethylenoxiden, umfasst, die in einem Block von Sol-Gel-Material eingebracht sind, welcher im UV-Bereich, jedoch nicht im sichtbaren Bereich absorbiert.

2. Ein multifunktioneller Detektor nach Anspruch 1, **dadurch gekennzeichnet, dass** in einem Block Sol-Gel-Material des ersten Sensors das Iodid 0,0054 bis 0,55 Gew.-% des Blocks ausmacht.

3. Ein multifunktioneller Detektor nach Anspruch 1 oder 2, **dadurch gekennzeichnet, dass** in einem Block von Sol-Gel-Material des ersten Sensors die reaktive Verbindung 0,05 bis 0,25 Gew.-% des Blocks ausmacht.

4. Ein multifunktioneller Detektor nach einem der Ansprüche 1 bis 3, angepasst an gasförmige Verbindungen oder Gemische gasförmiger Verbindungen, ausgewählt aus NH₂Cl, NHCl₂, NCl₃, Gesamtchlor, NOx, wobei x = 1 oder 2, O₃ und X₂, wobei X = Cl, Br oder I, enthalten in einer flüssigen oder gasförmigen Probe, **dadurch gekennzeichnet, dass** er weiter umfasst
- einen Filter, welcher eine neutrale, mit Sulfaminsäure imprägnierte Silicatmatrix umfasst,
- Vorrichtungen zum direkten in Kontakt bringen eines ersten Teils des Gasgemisches mit dem ersten Sensor,
- Vorrichtungen zum in Kontakt bringen eines zweiten Teils des Gasgemisches mit dem ersten Sensor, nachdem es den Filter durchlaufen hat.

5. Ein multifunktioneller Detektor nach einem der Ansprüche 1 bis 4, angepasst an gasförmige Verbindungen oder Gemische gasförmiger Verbindungen, ausgewählt aus NH₂Cl, NHCl₂, NCl₃, Gesamtchlor, NOx, wobei x = 1 oder 2, O₃ und X₂, wobei X = Cl, Br oder I, enthalten in einer flüssigen oder gasförmigen Probe, **dadurch gekennzeichnet dass** er weiter eine zweite Art von Sensoren umfasst, welche Phenol umfassen, das in einer Sol-Gel-Matrix eingebracht ist, die im UV-Bereich, jedoch nicht im sichtbaren Bereich absorbiert.

6. Ein multifunktioneller Detektor nach Anspruch 5, **dadurch gekennzeichnet, dass** in einem Block von Sol-Gel-Material des zweiten Sensors das Phenol 10 bis 25 Gew.-% des Blocks ausmacht.

7. Ein multifunktioneller Detektor nach einem der Ansprüche 5 und 6, **dadurch gekennzeichnet, dass** in einem Block von Sol-Gel-Material des zweiten Sensors das Natriumnitroprussid 0,01 bis 0,25 Gew-% des Blocks ausmacht.

8. Ein multifunktioneller Detektor nach einem der Ansprüche 5 bis 7, **dadurch gekennzeichnet, dass** ein Block von Sol-Gel-Material des zweiten Sensors Natriumhydroxid umfasst, welches 1 bis 17 Gew.-% des Blocks ausmacht.

9. Ein multifunktioneller Detektor nach einem der Ansprüche 4 bis 8, **dadurch gekennzeichnet, dass** in dem Filter, der eine neutrale Silicatmatrix umfasst, die Sulfaminsäure 5 bis 15 Gew.-% der Gesamtheit der Silicat- und Sulfaminsäurebestandteile der neutralen Silicatmatrix ausmacht.

10. Ein Verfahren zum Nachweis gasförmiger Verbindungen oder eines Gemischs gasförmiger Verbindungen, die in einer flüssigen oder gasförmigen Probe enthalten sind, wie in Anspruch 1 definiert, **dadurch gekennzeichnet, dass** ein multifunktioneller Detektor, wie in einem der Ansprüche 1 bis 4 definiert, einer Probe ausgesetzt wird, und dass man die eventuelle Farbänderung eines Blocks von Sol-Gel-Material, das den ersten Sensor darstellt, beobachtet.

11. Ein Verfahren zum Nachweis gasförmiger Verbindungen oder eines Gemisches gasförmiger Verbindungen, wie in Anspruch 5 definiert, welche in einer flüssigen oder gasförmigen Probe enthalten sind, **dadurch gekennzeichnet, dass** ein multifunktioneller Detektor, wie in Anspruch 5 definiert, einem Strom eines Gasgemisches oder einer Flüssigkeit ausgesetzt wird, und dass man die eventuelle Farbänderung der Blöcke von Sol-Gel-Material, die den ersten Sensor oder den zweiten Sensor darstellen, beobachtet und gegebenenfalls mit dem Nachweis der gasförmigen Verbindungen fortfährt.

12. Verwendung eines multifunktionellen Detektors, wie in einem der Ansprüche 1 bis 9 definiert, beim Einfangen gasförmiger Verbindungen, wie in Anspruch 1 definiert, welche in einem Gasgemisch oder in einer flüssigen Probe enthalten sind, oder bei deren Nachweis.

13. Verwendung eines multifunktionellen Detektors, wie in einem der Ansprüche 5 bis 9 definiert, beim Einfangen gasförmiger Verbindungen, wie in Anspruch 5 definiert, welche in einem Gasgemisch oder in einer flüssigen Probe enthalten sind, oder bei deren Nachweis.

14. Ein Verfahren zum Einfangen gasförmiger Verbindungen, wie in Anspruch 1 definiert, welche in einem Gasgemisch oder in einer flüssigen Probe enthalten sind, unter Verwendung eines multifunktionellen Detektors, wie in einem der Ansprüche 1 bis 9 definiert, als Sensor, oder gasförmiger Verbindungen, wie in Anspruch 5 definiert, welche in einem Gasgemisch oder in einer flüssigen Probe enthalten sind, unter Verwendung eines multifunktionellen Detektors, wie in einem der Ansprüche 5 bis 9 definiert, als Sensor, wobei ein Gasgemisch oder eine flüssige Probe mit dem multifunktionellen Detektor in Kontakt gebracht werden oder ein derartiger Strom darüber zirkulieren gelassen wird.

15. Ein System zum Einfangen oder Nachweis gasförmiger Verbindungen, welche in einem Gasgemisch oder in einer flüssigen Probe enthalten sind, unter Verwendung eines multifunktionellen Detektors, wie in einem der Ansprüche 1 bis 9 definiert, als Sensor.

## Claims

1. Multifunctional detector for gaseous compounds or mixtures of gaseous compounds chosen from NH₂Cl, NHCl₂, NCl₃, total chlorine, NOₓ where x=1 or 2, O₃ and X₂ where X=Cl, Br or I in a sample, said detector comprising a first sensor comprising an iodide and a reactive compound chosen from starch, amylose, amylopectin, xyloglucan, xylane, chitosan, glycogen, polyvinyl alcohol or a polyvinyl alcohol compound, cellulose or a cellulose compound, α-cyclodextrin, theobromine and block polymers of polypropylene oxides and polyethylene oxides, incorporated into a block of sol-gel material that absorbs in the UV but not in the visible.

2. Multifunctional detector according to Claim 1, **characterized in that** in a block of sol-gel material of the first sensor, the iodide represents from 0.0054% to 0.55% by weight of the block.

3. Multifunctional detector according to Claim 1 or 2, **characterized in that** in a block of sol-gel material of the first sensor, the reactive compound represents from 0.05% to 0.25% by weight of the block.

4. Multifunctional detector according to one of Claims 1 to 3, suitable for gaseous compounds or mixtures of gaseous compounds chosen from NH₂Cl, NHCl₂, NCl₃, total chlorine, NOₓ where x=1 or 2, O₃ and X₂ where X=Cl, Br or I, contained in a liquid or gaseous sample, **characterized in that** it further comprises:
- a filter comprising a neutral silicate matrix impregnated with sulphamic acid,
- means for bringing a first portion of the gas mixture directly into contact with the first sensor,
- means for bringing a second portion of the gas mixture into contact with the first sensor, after having passed through the filter.

5. Multifunctional detector according to one of Claims 1 to 4, suitable for gaseous compounds or mixtures of gaseous compounds chosen from NH₂Cl, NHCl₂, NCl₃, total chlorine, NOₓ where x=1 or 2, O₃ and X₂ where X=Cl, Br or I, contained in a liquid or gaseous sample, **characterized in that** it further comprises a second type of sensor comprising phenol incorporated into a sol-gel matrix that absorbs in the UV but not in the visible.

6. Multifunctional detector according to Claim 5, **characterized in that** in a block of sol-gel material of the second sensor, the phenol represents from 10% to 25% by weight of the block.

7. Multifunctional detector according to either of Claims 5 and 6, **characterized in that** in a block of sol-gel material of the second sensor, sodium nitroprussiate represents from 0.01 % to 0.25% by weight of the block.

8. Multifunctional detector according to one of Claims 5 to 7, **characterized in that** a block of sol-gel material of the second sensor comprises sodium hydroxide which represents from 1% to 17% by weight of the block.

9. Multifunctional detector according to one of Claims 4 to 8, **characterized in that** in the filter comprising a neutral silicate matrix, the sulphamic acid represents from 5% to 15% by weight of the total of the silicate and sulphamic acid constituents of the neutral silicate matrix.

10. Process for detecting gaseous compounds or a mixture of gaseous compounds contained in a liquid or gaseous sample as defined in Claim 1, **characterized in that** a multifunctional detector as defined in one of Claims 1 to 4 is exposed to a sample and **in that** the possible colour change of a block of sol-gel material constituting the first sensor is observed.

11. Process for detecting gaseous compounds or a mixture of gaseous compounds as defined in Claim 5 contained in a liquid or gaseous sample, **characterized in that** a multifunctional detector as defined in Claim 5 is exposed to a flow of a gas mixture or to a liquid and **in that** the optional colour change of the blocks of sol-gel material constituting the first sensor or the second sensor is observed, and optionally the detection of the gaseous compounds is carried out.

12. Use of a multifunctional detector as defined in one of Claims 1 to 9 in the trapping of gaseous compounds as defined in Claim 1 contained in a gas mixture or in a liquid sample, or in the detection thereof.

13. Use of a multifunctional detector as defined in one of Claims 5 to 9 in the trapping of gaseous compounds as defined in Claim 5 contained in a gas mixture or in a liquid sample, or in the detection thereof.

14. Process for trapping gaseous compounds as defined in Claim 1 contained in a gas mixture or in a liquid sample, using, as sensor, a multifunctional detector as defined in one of Claims 1 to 9, or gaseous compounds as defined in Claim 5 contained in a gas mixture or in a liquid sample, using, as sensor, a multifunctional detector as defined in one of Claims 5 to 9, wherein a gas mixture or a liquid sample is brought into contact with the multifunctional detector, or such a flow is made to circulate over this multifunctional detector.

15. System for trapping or detecting gaseous compounds contained in a gas mixture or in a liquid sample, using, as sensor, a multifunctional detector as defined in one of Claims 1 to 9.
